# EUROPEAN PATENT SPECIFICATION

(11) **EP 3 969 968 B1**
(45) Date of publication and mention of the grant of the patent: **11.09.2024**
(21) Application number: 20736439.9
(22) Date of filing: 18.06.2020
(51) Int. Cl.: G05B 15/02

(54) **INTEGRATED SCALABLE SYSTEM FOR MANAGING AND MONITORING A HOME OR WORK ENVIRONMENT**
INTEGRIERTES SKALIERBARES SYSTEM ZUR VERWALTUNG UND ÜBERWACHUNG EINER HEIM- ODER ARBEITSUMGEBUNG
SYSTÈME ÉVOLUTIF INTÉGRÉ DE GESTION ET DE SURVEILLANCE D'UN ENVIRONNEMENT DOMESTIQUE OU DE TRAVAIL

(30) Priority: 24.06.2019 IT 201900009882
(43) Date of publication of application: 23.03.2022
(73) Proprietor: International Security Service Vigilanza S.p.A., 00169 Roma (RM) (IT)
(72) Inventor: ROMANO, Luigi, 00169 Roma (RM) (IT)
(74) Representative: Fiammenghi, Eva
(86) International application number: PCT/IB2020/055716
(87) International publication number: WO 2020/261061

(56) References cited:
- US-A1- 2005 125 083
- US-A1- 2016 274 556
- US-A1- 2016 344 569
- US-A1- 2017 176 961
- US-A1- 2017 352 236
- US-A1- 2018 129 514

## Description

### Field of the invention

The present invention relates to the field of remote control and management systems of all systems relating to a home, an office or the like. More in detail, the invention described below intends to bring together, in a new and innovative way, the plurality of control systems which, to date, invade our spaces and are each dedicated to a specific system.

### Prior art

Until the eighties the technique for the construction of electrical systems had been well established for several years. One of the most advanced means of sending documents remotely was still the fax and there was still no hint of that technological and sociological "revolution" which after not many years was meant to be brought by the Internet and cellular telephony.

In this scenario, an Italian company, manufacturer of equipment for electrical systems, launched a competition among professionals in the sector with the aim of rewarding the best projects that applied a new technology already used in some European countries and which, somehow, was meant to subvert certain criteria which had hitherto been absolutely obvious and unquestionable for the construction of lighting systems. In fact, the assumption of the need for the unique connection, through the electric power cable, between a switch and a lamp so that it could turn on, collapsed, while the concept of "bus" cable for the transmission of controls and signals was introduced. Through this "bus" a control unit cyclically queried the switches and, when it recognized that it was closed, proceeded to make the lamps concerned turn on according to the correspondences that had been programmed via its software.

These was the beginning of what, through years of continuous evolution, would become the multiple home and building automation solutions available today. After the first approaches developed in Italy towards these innovations, the benefits thereof started to be perceived, related to two characteristics that are still the first to be mentioned when talking about building automation: integrated system management and flexibility. The first applications concerned almost exclusively lighting, mainly in office buildings and similar structures, for which the possibility of optimizing energy consumption was immediately evident thanks to the functional integration and the interaction between the manual power buttons and several other automatic control devices, such as presence detectors, twilight switches, time switches, as well as the first electrical load control devices.

Currently, integration is no longer solely between the devices inherent to a single system, being extended to multiple technological systems and up to the more complex BMSs (Building Management Systems). This, in addition to allowing to reach high levels of energy efficiency, entails many other advantages, first of all the possibility of managing a home or an entire building as a whole, both locally and remotely, through the various user interfaces currently available (touch screens, PCs, tablets, smartphones) that allow you to send commands, display signals and alarms, collect and process data, for example regarding energy consumption. The same possibility of creating even complex scenarios, configured on the specific needs of the user, derives from the wide possibilities of interaction that building automation creates among the most disparate types of systems present in buildings: thermoregulation, darkening systems (roller shutters, Venetian blinds, window shutters, curtains), water supply, security, entertainment and other subsystems.

Although to date home automation systems are at a high degree of development, some problems persist that the art has not yet solved.

In the first place, these are still very expensive systems the installation and configuration whereof requires the intervention of specialized technicians.

Secondly, it is still important to foresee all the possible needs of the user in order to better design the system, also in view of possible future developments, to avoid having to make new conduits and therefore masonry and painting works as the needs change.

The solution, in particular to this latest issue raised, is to set up a new system for any new need for environmental control and management. It follows that, to date, homes are full of remote control systems, control stations, devices that operate on batteries and therefore need to be recharged and, the most advanced probably have more than one App on their smartphone to remotely control some functionality of their home.

Some international patents relate to remote management systems such as, for example, the R0126446 patent. This relates to a system used for home automation, having both safety and control functions and functions for monitoring temperature, humidity and electrostatic charge in the home. According to the invention, the system mainly comprises some sensors which measure electrostatic charge, humidity and temperature respectively in a monitored area. Also included are motion sensors and smoke detectors connected to a management station that activates acoustic notifications in case of need.

US2005/125083 discloses a system and associated components for providing substantially automated operation and control of various functions within a premises, such as a residence. In one embodiment, the system comprises a server-based system which is adapted for low cost, ease of installation and operation, and ready repair by the premises owner. Indigenous wiring within the premises is used to a large extent in order to further reduce installation cost and facilitate ready integration by the user. Methods for installing and operating the aforementioned system and components are also described.

US2016/274556 describes systems and methods for monitoring and managing energy consumption for a managed facility. The managed facility may include one or more electronic devices such as appliances or other smaller electronics that consume energy when operated. A hub at the managed facility may receive energy usage information for the managed facility and provide the energy usage information to a server. The server may generate, based on the energy usage information, instructions for controlling some or all of the one or more electronic devices. The instructions may be generated based on additional information such as user preferences or rules, utility alerts, facility occupancy, energy demand, or other information. The hub may receive the instructions and provide corresponding control signals to the electronic devices to operate the devices to manage the energy consumption.

US2016/344569 discloses a method for controlling an external device by an electronic device, according to various embodiments, it may include: obtaining biometric information related to a user of the electronic device; generating user information related to the user based on the biometric information; and storing the user information.

US2018/129514 describes a method and an apparatus for adjusting device settings on a first device including receiving input from a second device and adjusting the device settings or settings of a third device responsive to the input.

US2017/352236 discloses a user-programmable portable wireless remote monitoring system including a base unit, a series of sensor units and a remote control device. The base unit is connected to the internet, and receives wireless alerts from sensor arrays deployed in the sensor units. When the sensor units detect a problem, then they send an alert to the base unit, which then relays the alert to the remote control device that is preferably a smartphone, tablet, or the like, including software for operating the system. The system may also incorporate smart outlets that are remotely operable by the remote control device, various monitors, a touchscreen, and wearable tracking devices to monitor a person within the home. The system is designed to provide security, home system monitoring, personal medical monitoring, and remote control of various electrical appliances. The system may also be controlled by using oral commands.

US2017/176961 discloses methods, systems, and non-transitory, machine-readable media that facilitates home automation control based on individualized audio differentiation of carbon monoxide detectors. Audio characteristics may be determined based on first sensor data.

Attributes may be defined based on the audio characteristics. Second audio characteristics may be determined based on the second sensor data. Second attributes may be defined based on the second audio characteristics. Third sensor data may be analyzed to identify a first alarm or a second alarm based on a volume and/or a directionality determined based on the third sensor data. Consequent to identifying the first alarm or the second alarm, a home automation rule may be determined. The home automation rule may include an operational setting of a home automation device. The home automation device may be instructed based on the determined home automation rule via a home automation network.

It is evident that neither the inventions that have just been briefly described, nor the others that exist and not even the techniques available on the market, are able to solve the above problems in a convincing manner. The present invention is defined by the attached independent claim. Other preferred embodiments may be found in the dependent claims.

### Description of the invention

According to the present invention, a scalable integrated system is provided which is able to monitor and manage a plurality of functions in a working or domestic environment, which effectively solves the above problems.

The advantage pursued by the present invention is to integrate in the same object, or in the same technological control unit, all the electronic instruments which serve to control a room by its occupants.

In particular, it will be the task of a manager to configure the desired features of the environment itself; the system, through appropriate detectors and sensors, will be able to reproduce such a setting (in terms of natural/artificial light, thermo-hygrometric conditions, background music, etc.) and maintain them until further notice.

Obviously, it will be possible for the manager user to monitor and modify the instruments present in the managed environment both on site and remotely, thanks to a dedicated App installed on his/her personal electronic device.

In the place to be monitored, therefore, a single console will be advantageously installed in data communication with the desired sensors, detectors and actuators.

Which devices to connect to the console, thus making them controllable by the manager user, will depend on the use of the environment and on the preferences of its occupants, configuring in any case a new and customized system which, however, will have the advantages of the present invention unaltered.

The electrically powered console will have all of the following features:
A) one LAN routing module for routing the internet connectivity consisting of:
   - a plurality of LAN RJ45 (Local Area Network Registered Jack 45 type) ports for connecting the Ethernet network equipment;
   - a WAN (Wide Area Network) port for internet connectivity from third party Ethernet apparatus like media converters for FTTH (Fiber To The Home) (e.g. optical fiber);
   - an RJ11 (Registered Jack 11 type) port for xDSL (Digital Exchange Station) connectivity;
   - an ATA (Advanced Technology Attachment) module with 2 FXS (Foreign Exchange Station) ports for using analogue telephones on VoIP (Voice over Internet Protocol) lines;
   - a Wi-Fi 802.11n module for connecting 2.4 Gh and 5 Gh wireless equipment;
   - an LTE (Long Term Evolution) + 5G module for connectivity on mobile line;
B) one USB (Universal Serial Bus) port for sharing external apparatus such as printers, hard disks and other peripherals by way of example;
C) one alarm event management module with Degree 2 protection consisting of:
   - an RF (Radio Frequency) 868 module for a wireless alarm sensor connection;
   - an eSim module for voice and data connectivity for alarm reports or for incoming and outgoing calls with other numbers;
   - a power supply backup buffer battery x so as to allow the alarm module to operate even in the absence of electric power;
D) at least one HDMI (High Definition Multimedia Interface) port for interfacing with Audio/Video apparatus, TVs, projectors by way of example;
E) one RF (Radio Frequency) module for proprietary and third party home automation apparatus. This module allows to interface the apparatus both with proprietary peripherals and with peripherals of other manufacturers e.g. DECT, Zwave, ZigBee;
F) one Bluetooth module for interfacing mobile and fixed equipment, also used for mapping and locating internal environments and proximity detection even through Beacon technology;
G) one monitoring sensor for detecting the environmental temperature and overheating of the apparatus;
H) one Led emergency lamp for support in case of power failure.

To ensure the correct operation of the console and therefore the exchange of data with all the connected devices, advantageously, said console also integrates a processor, adapted to collect all the data coming from the connected sensors and detectors to process them and manage the corresponding actuators and devices for the maintenance of the parameters desired by the manager user.

Communication with the devices will be ensured by a common system for connection to an internet or local network accessible by all devices associated to said console arranged in the home or work environment subject of management.

The console, in an even more advantageous version, includes:
- an audio module designed to recognize the voice of the manager user and receive voice commands. In this way, the system will be able to implement what the user wants both when he/she is inside the room, without necessarily having to carry the smartphone with him/her, or remotely, using the latter;
- a video module for connection on image and video display equipment;
- an integrated sound signal for emergency management;
- an integrated and separable display on the equipment housing to view the settings or images of the events;
- an integrated motion sensor capable of detecting movements in the vicinity of the equipment.

The devices to which the console can connect are, included in the present invention:
- electronic locks for each door connected to at least one video intercom;
- a connection device installed at each meter of the appliances such as electricity, water and gas;
- a temperature sensor connected to at least one air conditioner;
- luminous bodies, such as bulbs, LED strips and the like, provided with connection devices, controlled by said console;
- window shielding devices, such as shutters, roller shutters or curtains, provided with connection devices, controlled by said console;
- a common home assistant device;
- an automatic irrigation system designed to activate or deactivate the programmed watering of plants according to the weather forecasts found by said console via the internet;
- security cameras designed to send reports to said manager user via TV or other personal electronic device. In particular, the cameras can be advantageously set up to recognize the presence of unknown users in the managed environment and consequently obscure the video notifications intended for known users;
- at least one thermographic camera adapted to monitor the body temperature of the occupants, sending alarm reports in the event that at least one occupant shows a high temperature;
- at least one smartwatch for monitoring the vital parameters of at least one user, sending alarm signals in the event of exceeding predetermined thresholds of at least one monitored vital parameter;
- presence and/or absence control system of people, animals, objects.

Advantageously, the system object of the present invention, in its most advantageous embodiment, comprises biometric recognition means capable of uniquely identifying the manager user allowing remote payments and signing of contracts using the fingerprint, voice or image of his/her face.

The invention is set out in the claims.

The advantages offered by the present invention are clear in the light of the above description and will be even apparent from the accompanying figure and the related detailed description.

### Description of the figure

The invention will hereinafter be described in at least one preferred embodiment thereof by way of non-limiting example with the aid of the accompanying figure, in which:

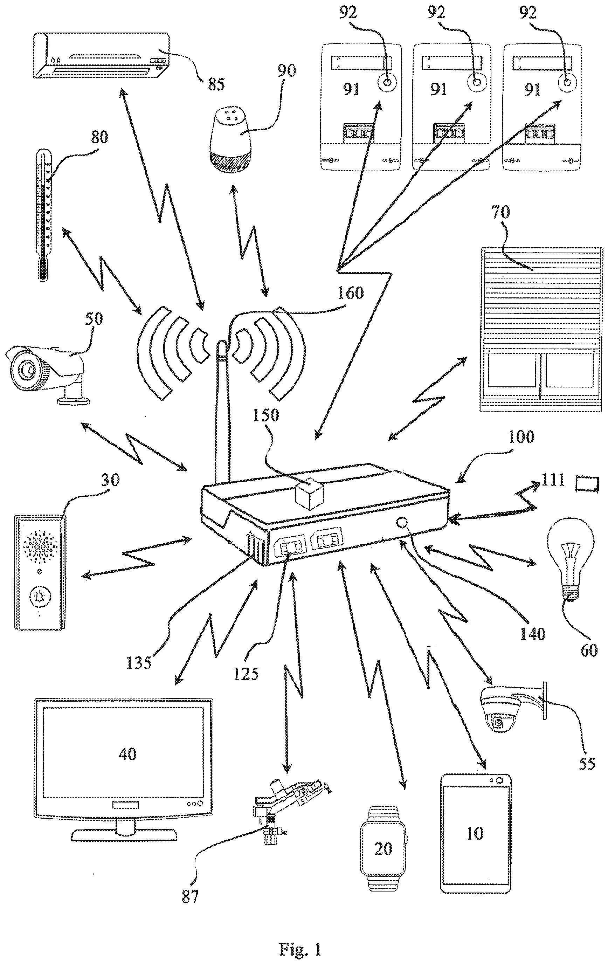

- FIGURE 1 shows the communication network that allows a user to control all the utilities of electricity, water and gas; the setting of the house in relation to lights, shutters and temperature; the opening of the doors by video intercom; the security system through cameras and thermographic cameras; watering of plants; home assistant (such as "Google home" or "Amazon Echo") and television. Through smartphones and smartwatches, it is also possible to check the health of the user who lives in the house.

### Detailed description of the invention

The present invention will now be described purely by way of non-limiting or binding example with the aid of the figure, which illustrates an embodiment relative to the present inventive concept.

Let us assume the use of the present invention in a domestic environment inhabited by a single person.

With reference to FIG. 1, the console 100 and its communication network with other devices is shown in a possible embodiment.

It is important to specify that it will be unlikely that two systems according to the present invention are configured identically to each other. The settings and preferences with which the two systems will be set, in fact, will depend very much on the personal preferences and habits of each individual user, without, for this reason, determining the loss of the unity of invention of the present invention.

That of FIG. 1, in fact, is only one of the possible operating schemes of the subject system. From time to time it will be configured according to the equipment that the user wants to control remotely.

The fact that the system is defined as "scalable" means that, even after the first configuration of the system, this can subsequently be configured to expand or restrict its operating range, adding connections with new devices or interrupting the data connection with some of them. Let us imagine that in the house taken as an example there are:
- security cameras 50;
- video intercom 30;
- shutters controllable via Wi-Fi 70;
- lights controllable via Wi-Fi 60;
- smart TV 40;
- centralized stereo system;
- air conditioning system controllable via Wi-Fi.

All amenities that are found in numerous homes today.

The installation of the console 100 described in detail below will allow the unification of the controls of all the aforementioned equipment via the same control unit and the same portable electronic device 10 represented by a common smartphone 10 in the possession of the home owner.

Such a console 100 must be connected to the electrical network, provided with at least one SIM card in a special slot 125 for connection to the data network and, through the connection device 160 with which it is provided, the console 100 will be configured to communicate with all the devices necessary for the operation of the house components that can be controlled remotely.

The processor 150 integrated in the console 100 will collect all the data from the sensors and detectors connected thereto to process them and manage the corresponding actuators and devices for maintaining the parameters desired by the manager user.

By way of example and without limitation, the user can set the temperature at which to bring the room's internal environment in certain time slots. Through a temperature sensor 80 connected to said conditioner 85 it will be possible to fulfill the wishes of the user who can monitor the temperature of his/her home in real time via his/her smartphone 10.

Another example is that of the light regulation of the home. Thanks to a brightness sensor 111, the processor 150 will be able to adjust the blinds 70 for natural lighting and the lights 60 for artificial lighting. This function also has particular advantages for application in offices, to preserve the health of workers' eyes.

While the user is relaxing watching television, thanks to the integration of all the aforementioned systems in the same control unit, he/she will be able to view, for example, the images taken by the video intercom 30 should someone press it to request entry.

The consent to open the door, in the preferred embodiment of the invention, can be granted by voice command that the console 100 will perceive thanks to the integrated microphone 140. Similarly, all changes to connected devices can be controlled by voice, via console 100 or via said App installed on the user's smartphone 10.

The stereo system can also be controlled from the console 100 or music can be listened to via IP streaming.

Let us assume now that the user needs to count the consumption of their gas and electricity utilities.

Even once the console 100 has been installed and configured, it will be possible to purchase a couple of connecting devices 92 to be installed at the gas and electricity meters 91. Said devices will communicate the meter data to the console 100 and therefore will make it consultable in real time by the user through said App installed on the smartphone 10. Finally, it is clear that modifications, additions or variants may be made to the invention described thus far which are obvious to a man skilled in the art, without departing from the scope of protection that is provided by the appended claims.

## Claims

1. Integrated scalable system for managing and monitoring a home or work environment, comprising a console (100) comprising all the following:
- one luminosity sensor (111) adapted to automatically adjust the luminosity and contrast parameters of a projector (110) depending on an overall luminosity of the projection environment;
- one slot for a SIM card (125), adapted to allow the connection to the internet network for communication to at least one portable electronic device (10) of a manager user when remotely positioned;
- one common system (160) adapted to connect to an internet or local network accessible by all devices associated to said console (100) arranged in the home or work environment subject of management;
- one processor (150), adapted to collect all data coming from sensors and detectors connected to said console (100) to process them and manage corresponding actuators and devices to maintain parameters desired by said manager user: said parameters being pre-set, in a step of configuring said system or being remotely set in response to the occurrence of a notification sent by said console (100) to said portable electronic device (10);
said sensors, detectors, actuators and devices, comprising all of the following:
- one electronic lock for each door connected to at least one video intercom (30); the image taken by said video intercom (30) appearing on the portable electronic device (10) of the manager user or on the projector (110) or on a smart TV (40);
- one connection device (92) installed at each meter (91) of appliances:
- one temperature sensor (80) connected to at least one air conditioner (85) which, by means of said processor (150) of the console (100), is adapted to automatically maintain thermo-hygrometric conditions pre-set by said manager user:
- a plurality of luminous bodies (60), provided with connection devices, controlled by said console (100), adapted to switch lights on or off as a function of a scenario remotely set by said manager user by means of said portable electronic device (10);
- a plurality of devices (70) to shield windows, provided with connection devices, controlled by said console (100), adapted to shield or not shield the natural light as a function of a scenario remotely set by said manager user by means of said portable electronic device (10);
wherein said console (100) further comprises all the following:
- one local area network, LAN, routing module to route the internet connectivity consisting of:
• a plurality of LAN registered jack 45 type, RJ 45, ports to connect the Ethernet network equipment;
• a wide area network, WAN, port for internet connectivity from third party Ethernet apparatus like media converters for fiber to the home, FTTH;
• an RJ11 port to connect digital subscriber line, xDSL,
• an advanced technology attachment, ATA, module with 2 foreign exchange station, FXS, ports to use analogue telephones on voice over Internet protocl , VOIP, lines;
• a wireless-fidelity, Wi-Fi^{™}, 802.11n module to connect 2.4 GHz and 5 GHz wireless equipment;
• an long term evolution, LTE, + 5G module to connect on mobile line;
- one universal serial bus, USB, port to share external apparatus such as printers, hard disks and other peripherals;
- one alarm event management module with Degree 2 protection consisting of:
• a radio frequency, RF, 868 module to connect a wireless alarm sensor;
• an eSim module to connect voice and data for alarm reports or for incoming and outgoing calls with other numbers;
• a power supply backup buffer battery to allow the alarm module to operate even in the absence of electric power;
- at least one high definition multimedia interface, HDMI, port to interface with Audio/Video apparatus, TVs, projectors;
- one RF module for proprietary and third party home automation apparatus;
and wherein said system further comprises all of the following:
- one Bluetooth ^{™} module to interface mobile and fixed equipment, also used for mapping and locating internal environments and proximity detection even through Beacon technology;
- one monitoring sensor to detect the environmental temperature and overheating of said console;
- one Led emergency lamp to support in case of power failure;
- at least one audio speaker (135) to listen to radio stations set by means of said personal electronic device (10) of said manager user; said console (100) being connectable to at least one remote audio speaker by means of common wireless connection systems;
- at least one security video camera (50) adapted to send reports to said manager user by means of said projector (110), said smart TV (40) or said personal electronic device (10); said video camera (50) also being adapted to recognize the presence of unknown users in the environment subject of management and thus obscuring the notifications intended for known users;
- at least one thermographic camera (55) adapted to monitor the body temperature of the occupants, sending alarm reports should at least one occupant show high body temperature;
- at least one smartwatch (20) to monitor the vital signs of at least one user, sending alarm reports should pre-established thresholds of at least one vital sign subject of monitoring be exceeded.

2. Integrated scalable system for managing and monitoring a home or work environment, according to the preceding claim, wherein said console (100) comprises a microphone (140) adapted to recognize the voice of said manager user and receive voice commands.

3. Integrated scalable system for managing and monitoring a home or work environment, according to any one of the preceding claims, wherein it can be connected, by means of any wireless connection system, to a common "home assistant" device (90).

4. Integrated scalable system for managing and monitoring a home or work environment, according to any one of the preceding claims, wherein it comprises an actuator connected to at least one automatic irrigation system (87) adapted to activate or deactivate the programmed watering of the plants as a function of weather forecast found by said console (100) through the internet.

5. Integrated scalable system for managing and monitoring a home or work environment, according to any one of the preceding claims, wherein it comprises biometric recognition systems adapted to uniquely identify said manager user allowing remote payment and subscription to contracts.

6. Integrated scalable system for managing and monitoring a home or work environment, according to any one of the preceding claims, wherein it comprises location systems for monitoring the presence and/or moving away of people, animals, objects.

## Patentansprüche

1. Integriertes, skalierbares System zum Verwalten und Überwachen einer Wohn- oder Arbeitsumgebung, das eine Konsole (100) aufweist, die alles Folgende aufweist:
- einen Helligkeitssensor (111), der dazu angepasst ist, die Helligkeits- und Kontrastparameter eines Projektors (110) in Abhängigkeit von einer Gesamthelligkeit der Projektionsumgebung automatisch einzustellen;
- einen Steckplatz für eine SIM-Karte (125), der dazu angepasst ist, die Verbindung mit dem Internet-Netzwerk zur Kommunikation mit zumindest einer tragbaren elektronischen Einrichtung (10) eines Manager-Nutzers, wenn er entfernt positioniert ist, zu ermöglichen;
- ein übliches System (160), das dazu angepasst ist, sich mit einem Internet- oder lokalen Netzwerk zu verbinden, auf das durch alle zu der Konsole (100) gehörenden Einrichtungen, die im Gegenstand der Verwaltung zu Hause oder am Arbeitsplatz angeordnet sind, zugegriffen werden kann;
- einen Prozessor (150), der dazu angepasst ist, alle Daten zu sammeln, die von mit der Konsole (100) verbundenen Sensoren und Detektoren stammen, um sie zu verarbeiten und entsprechende Aktoren und Einrichtungen zu verwalten, um die durch den Manager-Nutzer gewünschten Parameter aufrechtzuerhalten; wobei die Parameter in einem Schritt des Konfigurierens des Systems voreingestellt werden oder als Reaktion auf das Auftreten einer durch die Konsole (100) an die tragbare elektronische Einrichtung (10) gesendeten Benachrichtigung ferneingestellt werden; wobei die Sensoren, Detektoren, Aktoren und Einrichtungen alles das Folgende aufweisen:
- ein elektronische Verriegelung für jede Tür, die mit zumindest einer Video-Gegensprechanlage (30) verbunden ist; wobei das durch die Video-Gegensprechanlage (30) aufgenommene Bild auf der tragbaren elektronischen Einrichtung (10) des Manager-Nutzers oder auf dem Projektor (110) oder auf einem intelligenten TV (40) erscheint;
- eine Verbindungseinrichtung (92), die an jedem Messgerät (91) von Geräten installiert ist;
- einen Temperatursensor (80), der mit zumindest einer Klimaanlage (85) verbunden ist, die mittels des Prozessors (150) der Konsole (100) dazu angepasst ist, automatisch die durch den Manager-Nutzer voreingestellten thermohygrometrischen Bedingungen aufrechtzuerhalten;
- mehrere zusammenhängende Körper (60), die mit Steuerungseinrichtungen versehen sind, die durch die Konsole (100) gesteuert werden, dazu angepasst, Lichter als Funktion eines durch den Manager-Nutzer mittels der tragbaren elektronischen Einrichtung (10) ferngesteuert eingestellten Szenarios ein- oder auszuschalten;
- mehrere Vorrichtungen (70), um Fenster abzuschirmen, die mit Verbindungseinrichtungen versehen sind, die durch die Konsole (100) gesteuert werden, und die dazu angepasst sind, das natürliche Licht als Funktion eines durch den Manger-Nutzer mittels der tragbaren elektronischen Einrichtung (10) ferneingestellten Szenarios abzuschirmen oder nicht abzuschirmen;
wobei die Konsole (100) ferner das Folgende aufweist:
- ein lokales Netzwerk, LAN, Routing-Modul, um die Internet-Konnektivität zu routen, bestehend aus:
• mehreren LAN-registrierten Anschlussbuchsen vom Typ RJ 45, um die Ethernet-Netzwerkausrüstung anzuschließen;
• einem Wide Area Network (WAN)-Port für die Internetkonnektivität von Ethernet-Vorrichtungen von Drittanbietern wie Medienkonvertern für Fiber to the Home (FTTH);
• einem RJ11-Port, um eine digitalen Teilnehmerleitung (xDSL) anzuschließen,
• einem Advanced Technology Attachment (ATA)-Modul mit 2 foreignexchange-station (FXS)-Ports, um analoge Telefone über Voice-over-Internet-Protocol (VOIP)-Leitungen zu nutzen;
• einem Wireless-Fidelity, Wi-Fi^{™}, 802.11n-Modul, um drahtlose 2,4 GHz- und 5 GHz-Ausrüstung anzuschließen;
• einem Long Term Evolution, LTE, + 5G Modul, um eine Mobilleitung anzuschließen;
- einen Universal Serial Bus-, USB-Port, um externe Geräte wie etwa Drucker, Festplatten und andere Peripheriegeräte gemeinsam zu nutzen;
- ein Modul zur Verwaltung von Alarmereignissen mit Schutzgrad 2, bestehend aus:
• einem Funkfrequenzmodul (HF) 868, um einen drahtlosen Alarmsensor anzuschließen;
• einem eSim-Modul, um Sprache und Daten für Alarmberichte oder für eingehende und ausgehende Anrufe mit anderen Nummern zu verbinden;
• eine Leistungsversorgungs-Back-up-Pufferbatterie, um dem Alarmmodul zu ermöglichen, auch bei Abwesenheit von elektrischer Leistung zu arbeiten;
- zumindest eine High Definition Multimedia Schnittstelle ("high definition multimedia interface"), HDMI, zum Verbinden mit Audio/Video-Geräten, Fernsehern und Projektoren;
- ein HF-Modul für proprietäre und Drittanbieter-Heimautomatisierungsgeräte;
und wobei das System weiterhin alle das Folgende aufweist:
- ein Bluetooth^{™}-Modul zum Anschließen mobiler und fester Ausrüstung, das auch zur Kartierung und Lokalisierung interner Umgebungen und die Näherungserkennung auch durch die Beacon-Technologie verwendet wird;
- einen Überwachungssensor, um die Umgebungstemperatur und das Überhitzen der Konsole zu bestimmen;
- eine Led-Notleuchte zur Unterstützung im Falle eines Leistungsausfalls;
- zumindest einen Audio-Lautsprecher (135), um Radiosendern zu hören, die mittels der persönlichen elektronischen Einrichtung (10) des Manager-Nutzers eingestellt sind; wobei die Konsole (100) über übliche drahtlose Verbindungssysteme mit zumindest einem entfernten Audio-Lautsprecher verbunden werden kann;
- zumindest eine Sicherheitsvideokamera (50), die dazu angepasst ist, mittels des Projektors (110), des intelligenten TVs (40) oder der persönlichen elektronischen Einrichtung (10) Berichte an den Verwalter-Nutzer zu senden; wobei die Videokamera (50) auch dazu angepasst ist, dass die Anwesenheit unbekannter Nutzer in der Umgebung, die Gegenstand der Verwaltung ist, zu erkennen und daher die für bekannte Nutzer bestimmten Benachrichtigungen zu verdecken;
- zumindest eine thermografische Kamera (55), die dazu angepasst ist, die Körpertemperatur der Bewohner zu überwachen und Alarmmeldungen zu senden, wenn zumindest ein Bewohner eine hohe Körpertemperatur zeigt;
- zumindest eine Smartwatch (20), um die Lebenszeichen von zumindest einem Nutzer zu überwachen, die Alarmmeldungen sendet, wenn vorab festgelegte Schwellenwerte für zumindest ein Lebenszeichen, das Gegenstand der Überwachung ist, überschritten werden.

2. Integriertes, skalierbares System zum Verwalten und Überwachen einer Wohn- oder Arbeitsumgebung nach dem vorhergehenden Anspruch, wobei die Konsole (100) ein Mikrofon (140) aufweist, das dazu angepasst ist, die Stimme des Manager-Nutzers zu erkennen und Sprachbefehle zu empfangen.

3. Integriertes, skalierbares System zum Verwalten und Überwachen einer Wohn- oder Arbeitsumgebung nach einem der vorhergehenden Ansprüche, wobei es mittels eines beliebigen drahtlosen Verbindungssystems mit einer üblichen Einrichtung (90) für einen "Heimassistenten" verbunden werden kann.

4. Integriertes, skalierbares System zum Verwalten und Überwachen einer Wohn- oder Arbeitsumgebung nach einem der vorangehenden Ansprüche, wobei es einen Aktuator aufweist, der mit zumindest einem automatischen Bewässerungssystem (87) verbunden ist, das dazu angepasst ist, das programmierte Bewässern der Pflanzen als Funktion der durch die Konsole (100) über das Internet gefundenen Wettervorhersage zu aktivieren oder zu deaktivieren.

5. Integriertes, skalierbares System zum Verwalten und Überwachen einer Wohn- oder Arbeitsumgebung nach einem der vorhergehenden Ansprüche, wobei es biometrische Erkennungssysteme aufweist, die dazu angepasst sind, den Manager-Nutzer eindeutig zu identifizieren, was Bezahlung aus der Ferne und die Unterzeichnung von Verträgen ermöglicht.

6. Integriertes, skalierbares System zum Verwalten und Überwachen einer Wohn- oder Arbeitsumgebung nach einem der vorhergehenden Ansprüche, wobei es Ortungssysteme zum Überwachen der Anwesenheit und/oder des Sichwegbewegens von Menschen, Tieren oder Gegenständen aufweist.

## Revendications

1. Système évolutif intégré de gestion et de surveillance d'un environnement domestique ou professionnel, comprenant une console (100) comprenant tout ce qui suit :
- un capteur de luminosité (111) adapté pour ajuster automatiquement les paramètres de luminosité et de contraste d'un projecteur (110) en fonction d'une luminosité globale de l'environnement de projection ;
- un emplacement pour une carte SIM (125), adapté pour autoriser la connexion au réseau Internet pour une communication avec au moins un dispositif électronique portable (10) d'un utilisateur gestionnaire lorsqu'il est positionné à distance ;
- un système commun (160) adapté pour se connecter à un réseau Internet ou local accessible par tous les dispositifs associés à ladite console (100) agencée dans l'environnement domestique ou professionnel faisant l'objet de la gestion ;
- un processeur (150), adapté pour collecter toutes les données provenant de capteurs et de détecteurs connectés à ladite console (100) pour les traiter et gérer des actionneurs et dispositifs correspondants pour conserver des paramètres souhaités par ledit utilisateur gestionnaire ; lesdits paramètres étant prédéfinis, dans une étape de configuration dudit système ou étant définis à distance en réponse à l'occurrence d'une notification envoyée par ladite console (100) audit dispositif électronique portable (10) ;
lesdits capteurs, détecteurs, actionneurs et dispositifs, comprenant tout ce qui suit :
- un verrou électronique pour chaque porte connectée à au moins un interphone vidéo (30) ;
l'image prise par ledit interphone vidéo (30) apparaissant sur le dispositif électronique portable (10) de l'utilisateur gestionnaire ou sur le projecteur (110) ou sur un téléviseur intelligent (40) ;
- un dispositif de connexion (92) installé au niveau de chaque compteur (91) d'appareils ;
- un capteur de température (80) connecté à au moins un climatiseur (85) qui, au moyen dudit processeur (150) de la console (100), est adapté pour maintenir automatiquement des conditions thermo-hygrométriques prédéfinies par ledit utilisateur gestionnaire ;
- une pluralité de corps lumineux (60), dotés de dispositifs de connexion, commandés par ladite console (100), adaptés pour allumer ou éteindre les lumières en fonction d'un scénario défini à distance par ledit utilisateur gestionnaire au moyen dudit dispositif électronique portable (10) ;
- une pluralité de dispositifs (70) de protection de fenêtres, dotés de dispositifs de connexion, commandés par ladite console (100), adaptés pour bloquer ou ne pas bloquer la lumière en fonction d'un scénario défini à distance par ledit utilisateur gestionnaire au moyen dudit dispositif électronique portable (10) ;
dans lequel ladite console (100) comprend en outre tout ce qui suit :
- un module d'acheminement de réseau local, LAN, pour acheminer la connectivité Internet constitué :
• d'une pluralité de ports LAN de type Registered Jack 45, RJ 45, pour la connexion de l'équipement de réseau Ethernet ;
• d'un port de réseau étendu, WAN, pour la connectivité Internet à partir d'un appareil Ethernet de tiers tel que des convertisseurs de supports pour la fibre optique jusqu'au domicile, FTTH ;
• d'un port RJ11 pour la connexion d'une ligne d'abonné numérique, xDSL,
• d'un module Advanced Technology Attachment, ATA, avec 2 ports Foreign Exchange Station, FXS,
pour l'utilisation de téléphones analogiques sur des lignes de voix sur IP, VOIP ;
• d'un module Wireless Fidelity, Wi-Fi^{™}, 802.11n pour la connexion d'un équipement sans fil de 2,4 GHz et 5 GHz ;
• d'un module +5G Long Term Evolution, LTE, pour la connexion sur une ligne mobile ;
- d'un port bus série universel, USB, pour le partage d'un appareil externe tel que des imprimantes, des disques durs et d'autres périphériques ;
- d'un module de gestion d'événements d'alarme avec une protection de degré 2 constitué :
• d'un module radiofréquence, RF, 868 pour la connexion d'un capteur d'alarme sans fil ;
• d'un module eSim pour la connexion de la voix et des données pour des rapports d'alarme ou pour des appels entrants et sortants avec d'autres numéros ;
• d'une batterie tampon d'alimentation électrique de secours pour permettre au module d'alarme de fonctionner même en l'absence d'électricité ;
- d'au moins un port interface multimédia à haute définition, HDMI, pour l'interface avec un appareil audio/vidéo, des téléviseurs, des projecteurs ;
- d'un module RF pour un appareil domotique propriétaire et de tiers ;
et dans lequel ledit système comporte en outre tout ce qui suit :
- un module Bluetooth^{™} pour l'interface avec un équipement mobile et fixe, également utilisé pour la cartographie et la localisation d'environnements internes et la détection de proximité même par le biais de la technologie Beacon ;
- un capteur de surveillance pour détecter la température ambiante et la surchauffe de ladite console ;
- une lampe à DEL d'urgence pour un soutien en cas de panne de courant ;
- au moins un haut-parleur audio (135) pour écouter des stations radio réglées au moyen dudit dispositif électronique personnel (10) dudit utilisateur gestionnaire ; ladite console (100) pouvant être connectée à au moins un haut-parleur audio distant au moyen de systèmes de connexion sans fil communs ;
- au moins une caméra vidéo de sécurité (50) adaptée pour envoyer des rapports audit utilisateur gestionnaire au moyen dudit projecteur (110), dudit téléviseur intelligent (40) ou dudit dispositif électronique personnel (10) ; ladite caméra vidéo (50) étant également adaptée pour reconnaître la présence d'utilisateurs inconnus dans l'environnement faisant l'objet de la gestion et masquant ainsi les notifications destinées aux utilisateurs connus ;
- au moins une caméra thermographique (55) adaptée pour surveiller la température corporelle des occupants, envoyant des rapports si au moins un occupant présente une température corporelle élevée ;
- au moins une montre connectée (20) pour surveiller les signes vitaux d'au moins un utilisateur, envoyant des rapports d'alarme en cas de dépassement de seuils préétablis d'au moins un signe vital faisant l'objet de la surveillance.

2. Système évolutif intégré de gestion et de surveillance d'un environnement domestique ou professionnel, selon la revendication précédente, dans lequel ladite console (100) comprend un microphone (140) adapté pour reconnaître la voix dudit utilisateur gestionnaire et recevoir des commandes vocales.

3. Système évolutif intégré de gestion et de surveillance d'un environnement domestique ou professionnel, selon l'une des revendications précédentes, dans lequel il peut être connecté, au moyen de tout système de connexion sans fil, à un dispositif « assistant domotique » (90) commun.

4. Système évolutif intégré de gestion et de surveillance d'un environnement domestique ou professionnel, selon l'une des revendications précédentes, dans lequel il comprend un actionneur connecté à au moins un système d'irrigation automatique (87) adapté pour activer ou désactiver l'arrosage programmé des plantes en fonction de prévisions météorologiques trouvées par ladite console (100) par le biais d'Internet.

5. Système évolutif intégré de gestion et de surveillance d'un environnement domestique ou professionnel, selon l'une des revendications précédentes, dans lequel il comprend des systèmes de reconnaissance biométrique adaptés pour identifier de façon unique ledit utilisateur gestionnaire permettant le paiement à distance et la souscription de contrats.

6. Système évolutif intégré de gestion et de surveillance d'un environnement domestique ou professionnel, selon l'une des revendications précédentes, dans lequel il comprend des systèmes de localisation pour surveiller la présence et/ou l'éloignement de personnes, d'animaux, d'objets.
